# EUROPEAN PATENT APPLICATION

(11) **EP 4 517 721 A1**
(43) Date of publication of application: **05.03.2025**
(21) Application number: 24195893.3
(22) Date of filing: 22.08.2024
(51) Int. Cl.: G09B 23/30, G09B 23/34

(54) **MULTI-FUNCTIONAL REUSABLE MODEL EYE UNIT FOR PRACTICE OF INTRAOCULAR EXAMINATIONS AND OPHTHALMIC LASER PROCEDURES**

(30) Priority: 28.08.2023 US 202363579262 P
(71) Applicant: Pacific University, Forest Grove, OR 97716 (US)
(72) Inventor: KENNING, Michela, Forest Grove, 97116 (US); OOLEY, Caroline, Beaverton, 97005 (US); YUDCOVITCH, Lorne, Dundee, 97115 (US); SORIA, Juan Andres, Hillsboro, 97123 (US); STEIN, Roman Scott, Sunnyvale, 94087 (US); ALBRITTON, Scott, Hillsboro, 97123 (US)
(74) Representative: Maikowski & Ninnemann Patentanwälte Partnerschaft mbB

(57) **Abstract**

The invention relates to a model eye unit comprising a lens assembly removably attached to an anterior scleral casing and a middle section removably coupled to the anterior scleral casing. In the model eye unit, the middle section is removably and height adjustably coupled to a posterior scleral section and the lens assembly includes a cornea lens. Further the invention relates to a method comprising in a first procedure, mounting a model eye unit to a laser device, focusing a laser beam on a first iris disc in a lens assembly of the model eye unit via operation of the laser device, removing the laser treated iris disc from the model eye unit, and reconfiguring the lens assembly for a second procedure.

## Description

### Cross-Reference to Related Application

The present application claims priority to U.S. Provisional Application No. 63/579,262, entitled "MULTI-FUNCTIONAL REUSABLE MODEL EYE UNIT FOR PRACTICE OF INTRAOCULAR EXAMINATIONS AND OPHTHALMIC LASER PROCEDURES", and filed August 28, 2023. The entire contents of the above-listed application are hereby incorporated by reference for all purposes.

### Field

The present description relates generally to a model eye unit which exhibits modularity for different procedures.

### Background/Summary

Intraocular examination and laser procedures are practices utilized in ophthalmic healthcare settings. However, access for students, interns, and residents to train and practice on live patient models is constrained in their specific training settings. These constraints may be due to potential patient safety concerns, eyes that are inappropriate anatomically and/or physiologically for the procedures, as well as a small number of patients available for training procedures, among other factors. Some artificial training devices are single-use or are designed to be used for training only one type of procedure, necessitating separate devices to practice multiple types of techniques.

Some ophthalmic healthcare trainees practice basic examination and procedural techniques on homemade, roughly-crafted devices or flat picture models that enable trainees to increase their basic equipment use skills. The trainees may also practice on fellow trainees or model patients under supervision, in some cases.

Ophthalmic training models have also been developed as a means of allowing students and practitioners the ability to increase patient examination skills and perform laser surgical techniques multiple times without using cadaver donor eyes, which demand special care for harvesting, preservation, transport, storage, and disposal. Additionally, training models reduce the reliance on live patient volunteers, who may experience discomfort or adverse side effects from novice trainees and/or prolonged examination. Some artificial model devices are made of various polymeric materials that attempt to mimic anatomical features of the eye.

US 9,336,692 B1 to Stuart Stoll discloses a device that uses a body which resembles the human eye, along with a suction cup that secures the model to a surface for the practitioner to use their laser surgical equipment. For selective laser trabeculoplasty (SLT) the model's main body houses cornea shell that contains an iris which is welded to the sidewalls of the unit, and the iris contains a pigmented angled structure made of polymeric material that, when SLT is performed, loses its pigment, indicating that the procedure was successfully completed. The model is filled with water prior to use, and this is achieved by removing the suction cup base to reveal a single opening at the base of the unit that is used to fill and empty the fluid contents of the model. Once the iris structure is depigmented/burned, the unit is disposed of and a new model eye unit is demanded for further practice. US 9,336,692 B1 also discloses a separate version of the device for neodymium-doped yttrium aluminum garnet (YAG) laser capsulotomy. In this device version, a cornea-scleral shell which contains an iris that is welded to the sidewalls of the unit, an anterior capsule membrane, an intraocular lens, and a posterior capsule that responds to the YAG laser is found. When the laser punctures the posterior capsule, it punches a hole in the membrane indicating that the procedure was successfully completed. The model is filled with water prior to use, and this, like in the SLT model, is achieved by unscrewing the suction cup base to reveal a single opening at the base of the unit that is used to fill and empty the fluid contents of the model. Once the artificial capsule is broken, the model eye unit is disposed of and a new model eye unit is demanded for further practice.

Other attempts have been made to use specialized models for simulation of surgical procedures for cataracts, vitreoretinal peel and foreign body procedures, penetrating keratoplasty, iris suturing, micro-invasive glaucoma surgery (MIGS), ocular suturing, and enucleation. These eye devices exist as separate models for unique training applications. Further, many training devices do not have exchangeable and replaceable parts, thereby increasing training expenditures.

While the aforementioned devices may be proxies for simulating basic anatomical structures and gross surgical outcomes, they are fundamentally designed to serve a single specific type of procedural function. Additionally, there are constraints as to the variety of techniques that can be demonstrated with the currently available models. In order to train and practice different techniques, multiple model eyes are demanded, each for the specific procedure or similar procedure it was designed for. Additionally, after each laser-affected portion of the device has been utilized in training, the entire unit is disposed of and replaced with a new unit. Although certain devices, may have a few interchangeable parts, these devices are not modular where specific structures are able to be replaced after an ophthalmic laser procedure. Additionally, these devices do not offer a design that allows for easy access to the internal structure of the model eye to change parts while retaining the anatomically correct functionality and behavior for selective laser trabeculoplasty (SLT), laser peripheral iridotomy (LPI), posterior capsulotomy, vitreolysis, and retinal photocoagulation. The inventors have therefore recognized a need for reusable and adaptable artificial training and practice tools in ophthalmology. The inventors have also specifically recognized a need for ophthalmic models which provide simulation of scleral indentation examination for trainees to learn and practice without live patient models.

To overcome at least a portion of the aforementioned challenges, a model eye unit is provided that is able to be used to train and practice multiple laser procedures and ophthalmic examination techniques. The procedures include, but are not limited to, SLT, peripheral iridotomy, posterior capsulotomy, vitreolysis, and retinal photocoagulation using established laser surgical equipment and procedures. The model eye unit may be used with any slit lamp, neodymium-doped YAG laser, and/or argon (e.g., green) ophthalmic lasers. It may be utilized with both contact and non-contact fundus lenses in order to assess anterior and posterior chambers of the model eye. The device may be reused by exchanging the post-treated laser irradiated or damaged elements as desired, in addition to having options for different structure sizes and pathologies incorporated into the simulated model elements.

Additionally, the model eye unit design allows for a trainee to practice several examination techniques including gonioscopy (evaluating the angle between the cornea and the iris using a contact mirror), retinoscopy (determining the refractive power of the eye using reflected light from a light-emitting scope), and common retinal examination techniques with non-contact or contact lenses during biomicroscopic (slit-lamp) viewing or with binocular indirect ophthalmoscopy (BIO). With an option for soft/flexible globe material, a procedure called scleral indentation (e.g., scleral depression) may also be performed on the model eye unit, if desired.

The model eye unit may include, in one example, a lens assembly removably attached to an anterior scleral casing. In such an example, the model eye unit further includes a middle section removably coupled to the anterior scleral casing. Further, in the model eye unit, the middle section is removably and height adjustably coupled to a posterior scleral section and the lens assembly includes a cornea lens. In this way, a highly adaptable model eye unit is provided with reusable parts that can be reconfigured for multiple ophthalmologic practice and training procedures.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### Brief Description of the Drawings

FIGS. 1A-1C show different views of a first example model eye unit.
FIGS. 2-9 show detailed views of different components that are included in a lens assembly of the model eye unit, depicted in FIGS. 1A-1C.
FIGS. 10-12 show detailed views of an anterior scleral casing for a model eye unit.
FIGS. 13-14 show different views of a first example of a middle section for a model eye unit.
FIG. 15 shows of a second example of a middle section for a model eye unit.
FIG. 16 shows a first example of a posterior scleral section for a model eye unit.
FIG. 17 shows different views of a second example of a posterior scleral section for a model eye unit.
FIG. 18 shows different views of another example of a model eye unit with a slip tube.
FIGS. 19A-19C show different views of another example of a model eye unit.
FIG. 20 shows the model eye unit, depicted in FIGS. 19A-19B, used in conjunction with a laser device.
FIG. 21 shows different views of another example of a model eye unit with a single thread interface between a middle section and a posterior scleral section.
FIG. 22 shows different views of another example of a model eye unit with a slip tube.
FIG. 23 shows different views of another example of a model eye unit.
FIG. 24 shows different views of another example of a model eye unit.
FIG. 25 shows different views of another example of a model eye unit.
FIG. 26 shows different views of another example of a model eye unit.
FIG. 27 shows different views of another example of a model eye unit.
FIG. 28 shows different views of another example of a model eye unit.
FIG. 29 shows an example of a sticker for a model eye unit.
FIG. 30 shows an example of a sample retinal image for a model eye unit.

### Detailed Description

The following description relates to a model eye for use in surgical training procedures. The model eye can be adapted for a multitude of different procedures. In one example, the model eye, may include an anterior section with internal components used to simulate the iris and intraocular lens and intraocular lens capsule. In such an example, the model eye further includes a middle section that connects the anterior and posterior segments, allowing for elongation of the eye to simulate anatomical variations in eye length for real life patients, and a posterior segment designed to replicate the internal curvature of the retina, while providing functionality for filling or draining fluids without opening the unit, if desired. The model eye may have dimensions and behave in similar fashion as a natural human eye. Further, one aim of the model eye is to enable practitioners, clinicians and those in training, to perform various training and ophthalmic evaluation procedures, typical of optometry and ophthalmology clinical practice in a safe, repeatable, and cost-effective manner.

Multiple embodiments of a model eye unit are described herein. To elaborate, three embodiments of a model eye are described herein. However, model eyes with different combinations of features from the three embodiments have been contemplated.

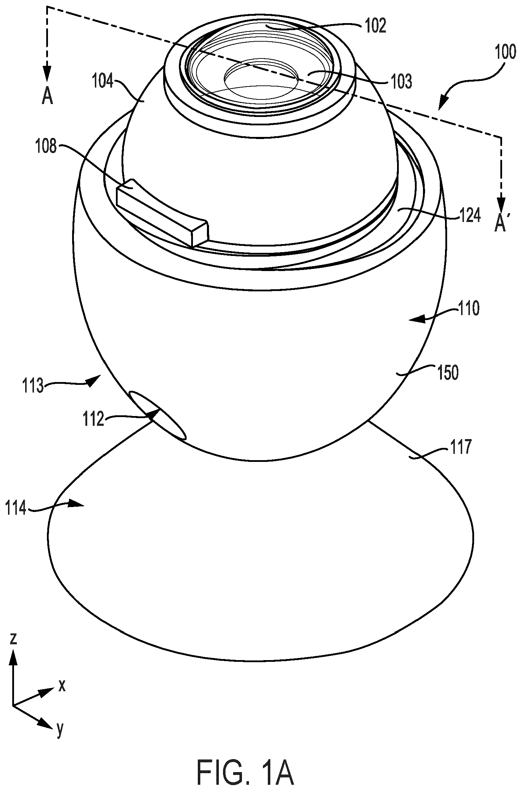

In a first embodiment, depicted in FIG. 1A, an assembled view of a model eye unit 100 is illustrated. The model eye unit 100 in the illustrated example includes a lens 102 (e.g., a clear lens) which allows light to pass through freely into the inside of the unit. Visible inside is an iris disc 103 (e.g., an upper iris disc) that fits within the anterior scleral casing 104. The anterior scleral casing 104 may sit atop a middle section 124 which may form a water tight seal, allowing fluid to be retained in the unit, if desired. A protrusion 108 (e.g., a tab) in the anterior scleral casing 104 allows a user's finger to be used to separate the anterior portion from the middle portion. Consequently, the eye may be more efficiently assembled and disassembled.

The middle section 124 may sit inside the posterior scleral section 110, which contains a pass-through hole 112 for mounting the unit to a laser device, or human head model using hardware, and that also serves the purpose of allowing a syringe to be used to inject or remove fluid content from the model eye unit without opening the unit using the protrusion 108, if wanted. A suction cup 114 may be used to secure the device onto a surface such as an ophthalmic laser unit headrest, a biomicroscope headrest, an examination chair, a wall, and the like. However, other suitable unit mounting mechanisms may be utilized in other examples. More generally, the pass-through hole 112 may be used for hardware mounting. The pass-through hole 112 is positioned on a lower side 113 of the posterior scleral section 110, in the illustrated example. However, other hole locations are possible. The posterior scleral section 110 further includes a curved outer surface 150, in the illustrated example. Further, an outer surface 117 of the suction cup 114 tapers in a vertical direction, in the illustrated example.

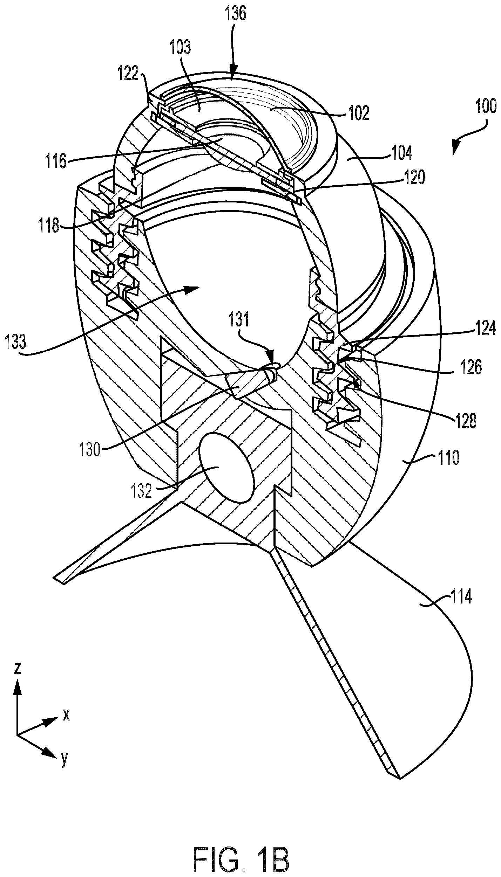

Cutting plane A-A' denotes the cross-sectional view depicted in FIG. 1B. The other cross-sectional views depicted herein are taken along cutting planes in a similar location to the cutting plane A-A' depicted in FIG. 1B.

An axis system is provided in FIG. 1A, as well as FIGS. 1B-28, for reference and when appropriate. The z-axis may be a vertical axis (e.g., parallel to a gravitational axis), the x-axis may be a lateral axis (e.g., horizontal axis), and/or the y-axis may be a longitudinal axis. However, alternate orientations of the axes may be used, in other examples.

FIG. 1B shows the model eye unit 100 in cross-section. The lens 102 is attached to the anterior scleral casing 104 forming a water seal. In the cross-section, the iris disc 103 is visible which sits atop a clear intraocular lens 116, which sits atop a thin capsule film 118. The intraocular lens 116 and the thin capsule film 118 are sandwiched between the iris disc 103 and an intraocular lens holding disc 120 which sit inside ridges 122 of the anterior scleral casing 104. A middle section 124 is shown fully inserted into the posterior scleral section 110 via a double-sided threaded interface 126 found in the middle section and matching threads 128 in the posterior scleral section. The threaded interface allows the middle section 124 to be height adjusted with regard to the posterior scleral section 110. In this way, the model eye unit may be adapted for use in a wider variety of training procedures, thereby increasing the customer appeal of the model eye unit.

Visible is the suction cup 114 which is used in the first embodiment to hold the model eye unit 100 onto the laser/training equipment, and a plug 130 which may be used, along with a syringe, to remove or add fluid into the unit if the user so chooses. The plug 130 is therefore a removable plug that forms a water tight seal with an opening 131 in the posterior scleral section 110. The plug 130 and the opening 131 allow an interior section 133 of the model eye unit to be filled with fluid, allowing for a more accurate procedural simulation. A pass-through hole 132 is included for hard mounting the model eye unit 100. A central axis of the opening 131 may be angled with regard to a vertical axis. However, the opening may have another orientation, in alternate embodiments.

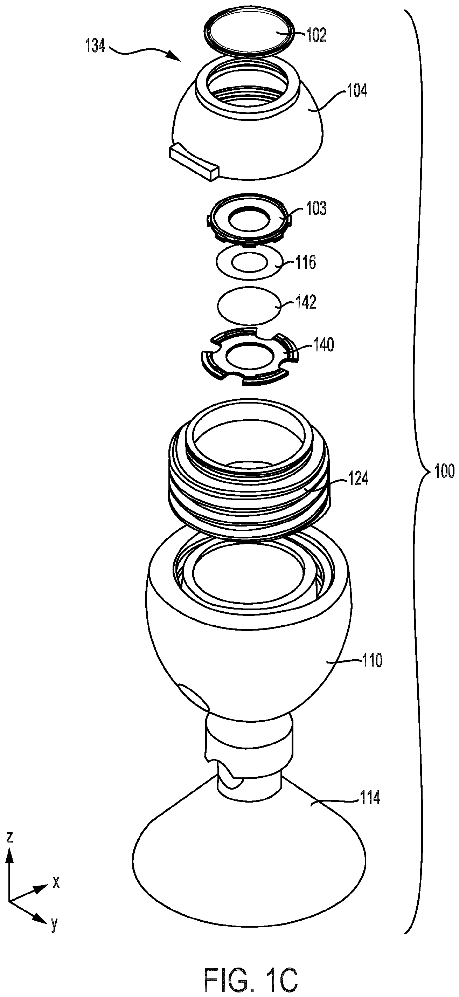

FIG. 1C shows an exploded view of the model eye unit 100. FIG. 1C illustrates an upper assembly 134 (e.g., a lens assembly) of the model eye unit 100 that includes the lens 102 that simulates the cornea. Thus, the lens 102 may specifically be referred to as a cornea lens. The upper assembly 134 may further include anterior scleral casing 104, the iris disc 103, the intraocular lens 116, the thin film disc 142, and the intraocular lens holding disc 140. However, different upper assembly configurations have been contemplated, as discussed in greater detail herein. FIG. 1C further illustrates the middle section 124, the posterior scleral section 110, and the suction cup 114. Parts of the lens assembly may be disposable. For instance, the iris disc 103 that may include a sticker may be a disposable component. For example, the iris disc may be laser treated during a procedure and then replaced with another iris disc for subsequent procedures. Other components in the model eye unit may however be re-usable such as the suction cup 114, posterior scleral section 110, the middle section 124, and/or the anterior scleral casing 104. Designing the model eye unit with selected re-usable parts allows training expenditures for trainees to be decreased. It will be understood, that the lens assembly may be efficiently replaced to allow the model eye unit to be repeatedly used for training. Further, the lens assembly may be reconfigured for a variety of different training procedures, as elaborated upon herein, thereby expanding the applicability of the model eye unit.

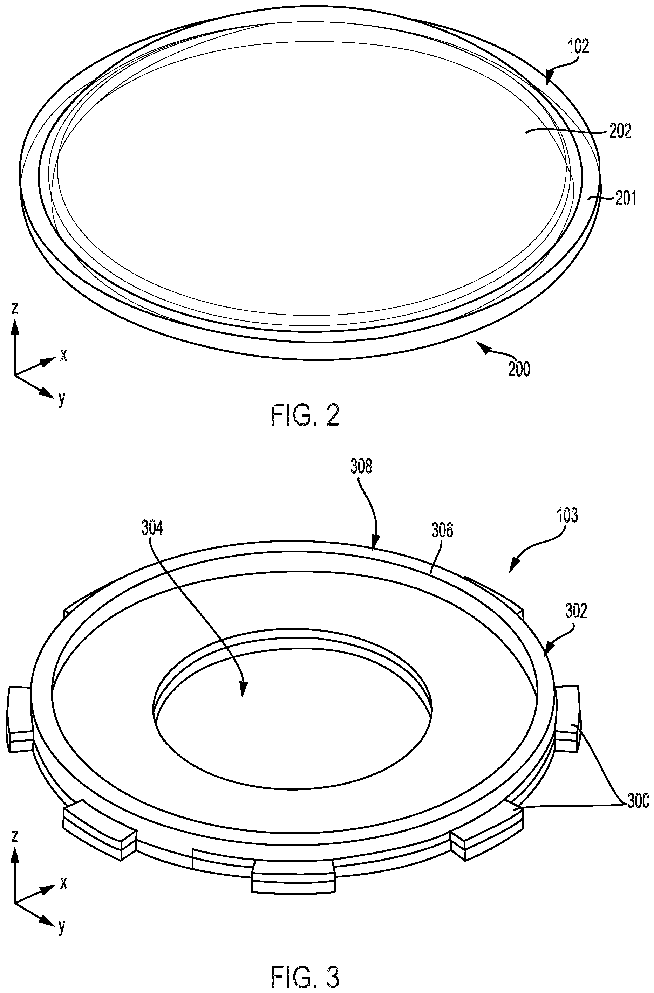

FIG. 2 shows a detailed view of the lens 102 that may simulate a cornea. The lens 102 may be constructed of a polymer and/or other suitable material(s) that allows light to pass through the lens and enables a clear view of the interior components, as well as a clear path for laser equipment light to travel unobstructed or without deviating from its intended path. The lens 102 is designed and constructed in a way that it can be placed flush against the top flat surface of the anterior scleral casing 104 so that they can be glued, welded, and/or pressure fitted in a way that allows for water sealing, in one example. In some instances, the lens 102 may be attached to the casing and/or other components using an ultraviolet (UV) curing clear resin and/or other suitable attachment techniques.

The lens 102, shown in FIG. 2, may be constructed out of a polymer material that allows light to pass freely through the lens and enable a clear view of the interior components. The intraocular lens 116 may also be constructed out of a suitable polymeric material that allows light to pass through. Additionally, the intraocular lens holding disc 140, the anterior scleral casing 104, the posterior scleral section 110, and the middle section 124, shown in FIGS. 1A-1C may be constructed out of one or more polymeric materials that do not allow light to pass therethrough and enables the components to be removably connected to one another, when appropriate. Further, the suction cup 114 may be constructed out of a polymeric material that exhibits a desired amount of elasticity which allows a partial vacuum to be generated in the suction cup to retain the model eye in a desired location. As such, the suction cup may be constructed out of a different polymeric material than the other components of the model eye unit, in one example.

A peripheral edge 201 of the lens 102 is depicted in FIG. 2 along with a curved upper surface 202. The peripheral edge 201 may be profiled to removably attach to the anterior scleral casing 104, shown in FIG. 1C.

Inside the anterior scleral casing 104 a series of components may be configured to perform specific training/practice methodologies. The set of internal components 136 is shown in FIGS. 1B and 1C and are described in greater detail herein.

FIG. 3 shows a top view of the iris disc 103 where a series of arms 300 are visible around the outer perimeter 302, in the illustrated example. The arms 300 may be designed to fit inside the anterior scleral casing 104 (shown in FIGS. 1A-1C) so that the iris disc 103 is securely held in place against the sides of the casing. The arms 300 also serve the function of allowing fluid and air to move freely, reaching the lens space 200 (shown in FIG. 2) and ensuring, when fluid filled, that little or no bubbles are trapped in the lens space. There may be a pupillary opening 304 in the middle of the iris disc 103 which may have varying diameters (e.g., 2 millimeters (mm) - 8 mm, in one use-case example) covering the typical pupil aperture during constriction or dilation of the pupil. This opening also aides in fluid flow and reduction (e.g., prevention) of air bubble trapping. The iris disc 103 may have a raised edge 306 in the outer perimeter 302 of the top side 308 that may extend approximately 0.5 mm from the plane of the iris disc 103, in one use-case example, to imitate the trabecular meshwork of the eye, in one use-case example. However, other suitable iris disc dimensions have been envisioned.

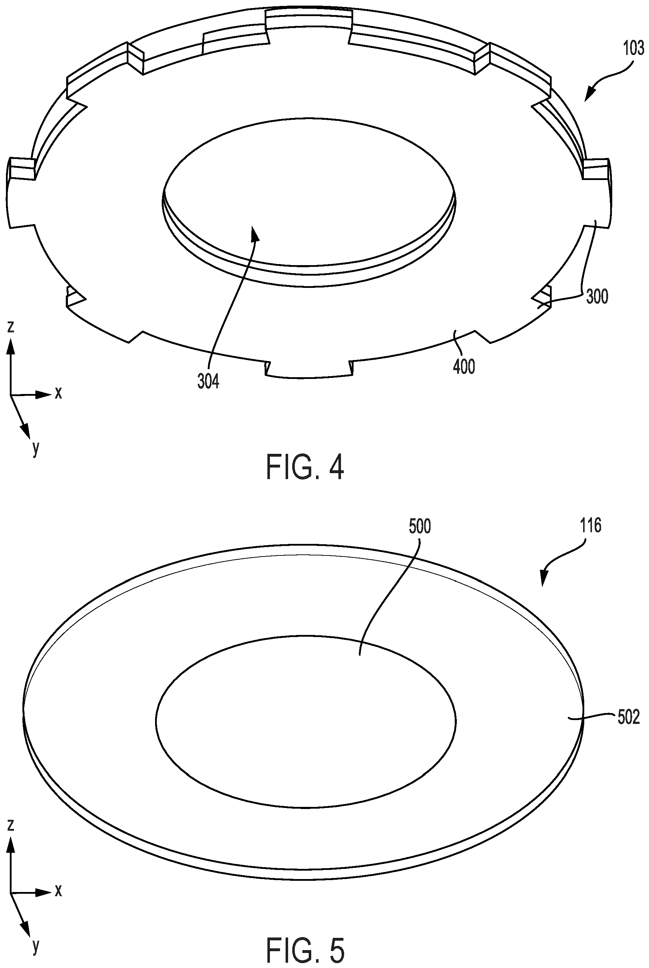

A bottom view of the iris disc 103 is shown in FIG. 4. To elaborate, the arms 300, the pupillary opening 304, and no elevated ridge are illustrated in the example of the iris disc 103 depicted in FIG. 4. In the illustrated example, the iris disc 103 includes a substantially planar lower surface 400. However, the iris disc may have other suitable contours in other examples.

FIG. 5 shows a top view of the intraocular lens 116 where a shaded portion 500 (e.g., darkened circular portion) represents the oval shape of the lens. The shaded portion 500 is circumferentially surrounded by a flat structure 502 (which is lighter in color than the shaded portion) of the lens, in the illustrated embodiment.

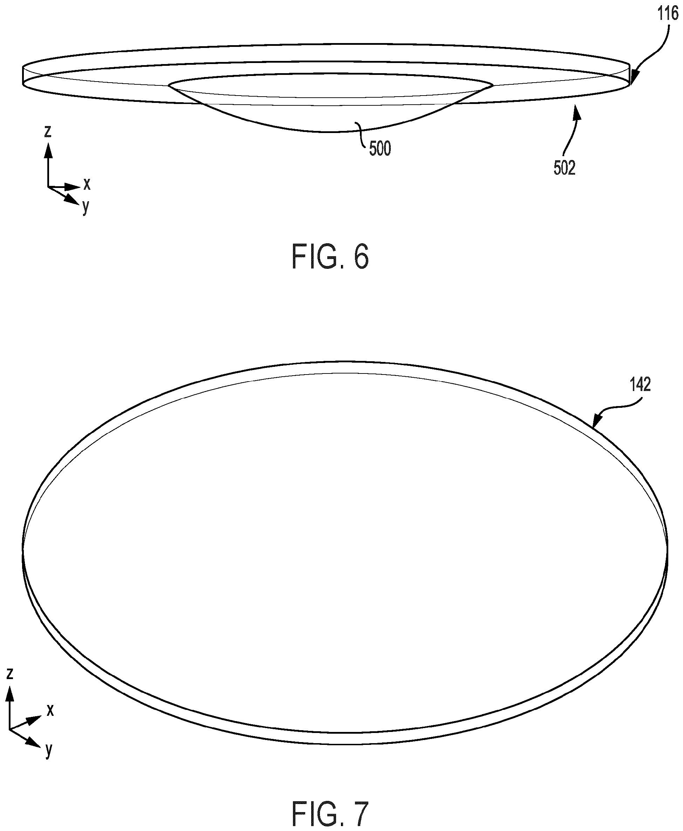

FIG. 6 shows a cross-sectional view of the intraocular lens 116. The shaded portion 500, exhibiting the lens shape, is again depicted in FIG. 6. Further, the flat structure 502 of the lens is profiled to fit in the space between the iris disc 103, shown in FIG. 1C, and the intraocular lens holding disc 140, shown in FIG. 1C, allowing the lens side of the intraocular lens to sit inside the opening of the intraocular lens holding disc. The intraocular lens 116 may be constructed out of a clear and comparatively hard polymer that allows light to freely pass without diverting its path, in one example. However, other suitable intraocular lens constructions may be used, in other examples.

FIG. 7 shows a detailed view of a thin film disc 142 (which is additionally illustrated in FIG. 1C). The thin film disc 142 (e.g., capsule film) may be used to mimic the intraocular lens capsule that is affected during capsulotomy procedures, in one example. The material used to construct the thin film disc may be a flexible polymer (e.g., a plastic such as low-density polyethylene (LDPE), in one use-case example) and/or a thin film that is constructed out of waxes and polyolefins, such as Parafilm^{™} in one use-case example.

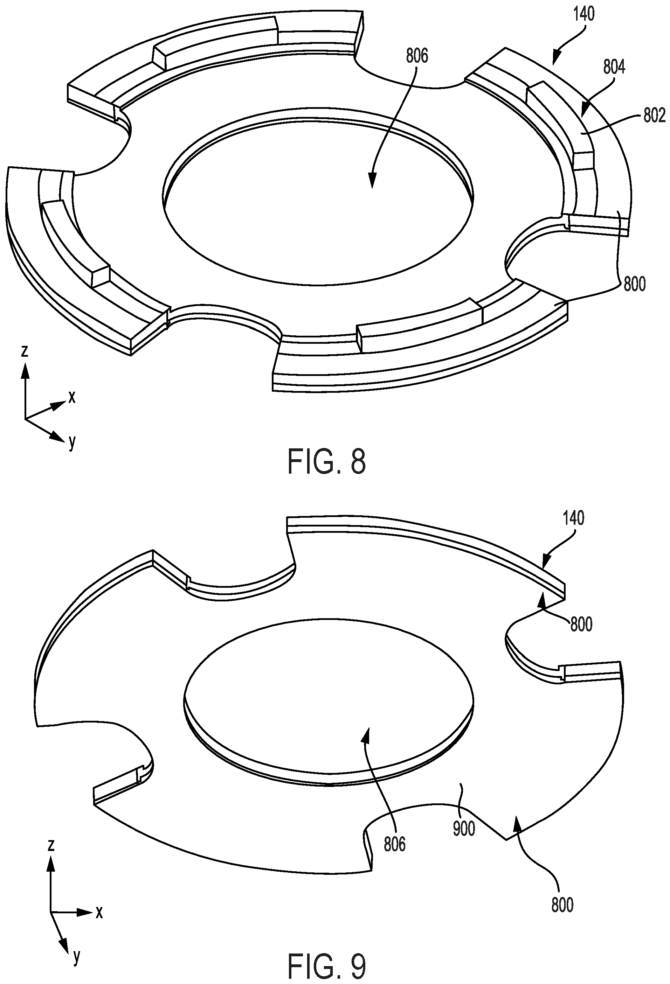

FIG. 8 shows a top perspective view of the intraocular lens holding disc 140. In the illustrated example, the intraocular lens holding disc 140 has arms 800 that are designed to fit inside the anterior scleral casing 104, shown in FIGS. 1B and 1C, so that it is securely held in place against the sides of the casing, if desired. The arms 800 may also serve the function of allowing fluid and air to move freely between the unit. There are multiple (e.g., four) elevated sections 802 (e.g., protrusions) in the outer perimeter 804 of intraocular lens holding disc 140, in the illustrated example. The elevated sections 802 are profiled to snap against the arms of the iris disc 103, shown in FIGS. 1B and 1C, while creating a pocket for the intraocular lens 116 and the thin film disc 142 (e.g., capsule film), shown in FIG. 1C, to sit in and be held securely during use. As illustrated in FIG. 8, the intraocular lens holding disc 140 may have an opening 806 that is approximately the size of the circumference of the shaded portion 500 of the intraocular lens 116, shown in FIG. 5.

A bottom view of the intraocular lens holding disc 140 is shown in FIG. 9. To elaborate, FIG. 9 depicts the arms 800, the intraocular lens opening 806, and a flat surface 900.

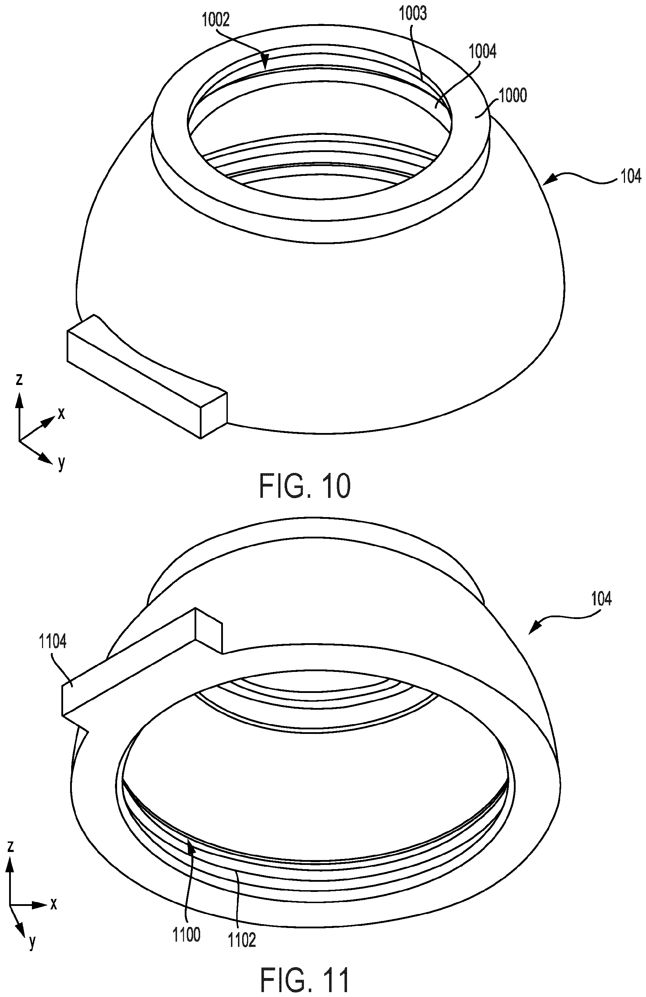

FIG. 10 shows a top perspective view of the anterior scleral casing 104 that is designed to mimic the front scleral portion of the eye. The anterior scleral casing 104 may be constructed out of a translucent flexible polymer material that provides tactile feedback to the practitioners, simulating the behavior of the fluid filled eye tension, if desired. A flat surface 1000 in the anterior scleral casing 104 enables the lens 102, shown in FIG. 1C, to be seated and sealed against the anterior scleral casing. To elaborate, the lens 102 (shown in FIG. 2) may be designed and constructed in a way that it can be placed flush against the top flat surface 1000 of the anterior scleral casing 104 so that they can be glued, welded or pressure fitted in a way that allows for water sealing. Specifically, in one use-case example, the lens may be coupled to the anterior scleral casing via UV curing clear resin, as previously indicated.

Further in FIG. 10, a first set of internal ridges 1002 (that includes an upper ridge 1003) allows the iris disc 103 (shown in FIGS. 1C and 4) to be seated closest to the upper end of the internal casing, if desired. Additionally, another ridge 1004 may be positioned below the upper ridge 1003 (e.g., at 1 mm distance, in one use-case example) to allow the intraocular lens 116 and the thin film disc 142 (e.g., capsule film), shown in FIG. 1C, to be secured in place in between the iris disc 103 and the intraocular lens holding disc 140, shown in FIG. 1C. The anterior scleral casing 104 may be constructed out of a translucent flexible polymer material that provides tactile feedback to the practitioners, simulating the behavior of the fluid filled eye tension.

FIG. 11 shows a bottom perspective view of the anterior scleral casing 104. In this view, a second set of ridges 1100 is visible in the lower inner casing surface 1102. The second set of ridges 1100 function to seal the unit against the middle section 124, shown in FIGS. 1B and 1C, forming a water tight seal. To aid with the insertion and removal of the anterior scleral casing 104, a protruding tab 1104 may be present to allow fingers, fingernails, and/or tools to be used in assisting in the separation of the parts, without degrading the sealing mechanism. In one example, the anterior scleral casing 104 may be constructed out of a semi-rigid elastomeric polymer that provides tactile flexibility to the component, simulating the tactile feel of the scleral part of a human eyeball.

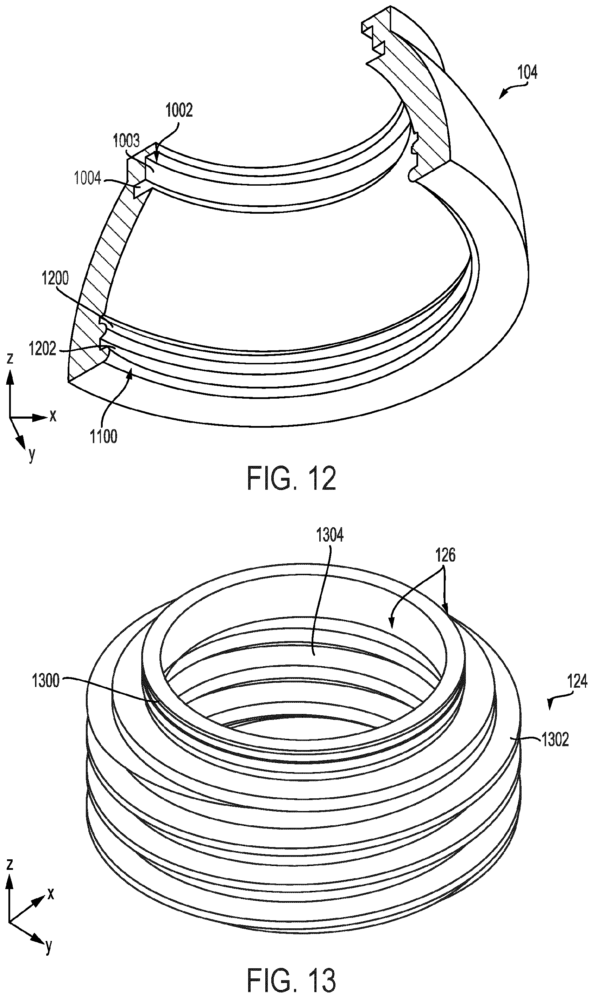

FIG. 12 depicts a cross-sectional view of the anterior scleral casing 104 with the top set of ridges 1002 that include the upper ridge 1003 and the lower ridge 1004. FIG. 12 further illustrates the second set of ridges 1100 (e.g., lower set of ridges) that include ridges 1200 and 1202.

For all of the model eye unit embodiments described herein, the lens, the anterior scleral casing, the iris disc, the intraocular lens, the lens capsule film, and the intraocular lens disc may be identical (e.g., in size, shape, and material construction). However, the model eye units may differ in the middle section and the posterior casing. The reason for the different model eye unit embodiments stems from the desire to simulate different anatomical sizes for the human eye, as the distance between the intraocular lens and the retina/optic nerve determines a person's visual acuity (far sightedness/near sightedness). As a result, the eye unit may be efficiently adapted for different procedures, thereby expanding unit applicability and increasing its customer appeal.

FIG. 13 shows a top perspective view of the middle section 124 which, in the illustrated example, has a cylindrical shape and includes an upper row of ridges 1300 that are profiled to engage the lower set of ridges 1100 of the anterior scleral casing 104, shown in FIG. 12, that form a water tight seal between the parts.

Additionally, in the illustrated example, the middle section 124 has external threads 1302 and internal threads 1304 in the double-sided threaded interface 126 that allow the unit to be screwed (e.g., in a clockwise direction) into the posterior scleral section 110, shown in FIGS. 1B and 1C, until the top row of ridges is exposed. However, the middle section 124 may be designed so that by turning it counterclockwise (from a fully inserted position), it may extend the middle section from a desired length (e.g., 0 mm to 10 mm, in one use-case example), simulating the natural elongation of eyes, which result in a change in diopter for every mm of elongation or contraction of the eye (myopia or hyperopia), allowing for the model to simulate the most common eye anatomical lengths found in patients around the world.

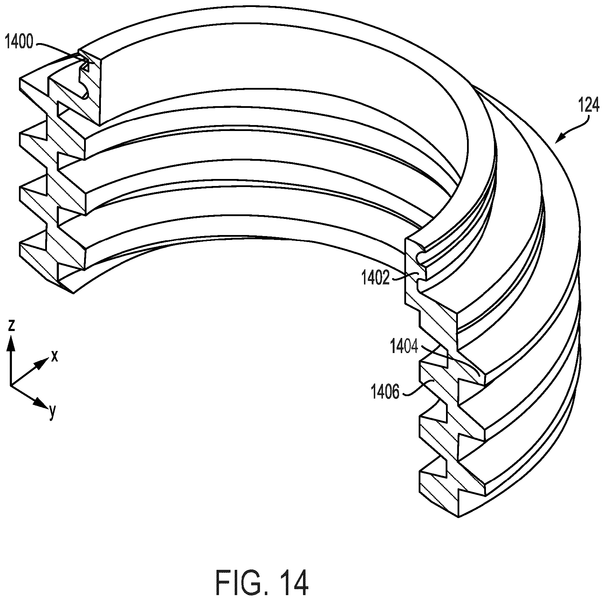

FIG. 14 shows a cross-sectional view of the middle section 124 that includes upper ridges 1400 and 1402, external threads 1404, and internal threads 1406. The middle section 124 may be designed and constructed in a way that it allows for a watertight seal to be retained via the double threaded arrangement (i.e., the external threads 1404 and the internal threads 1406), even when maximally extended (e.g., extended to 10 mm, in one use-case example).

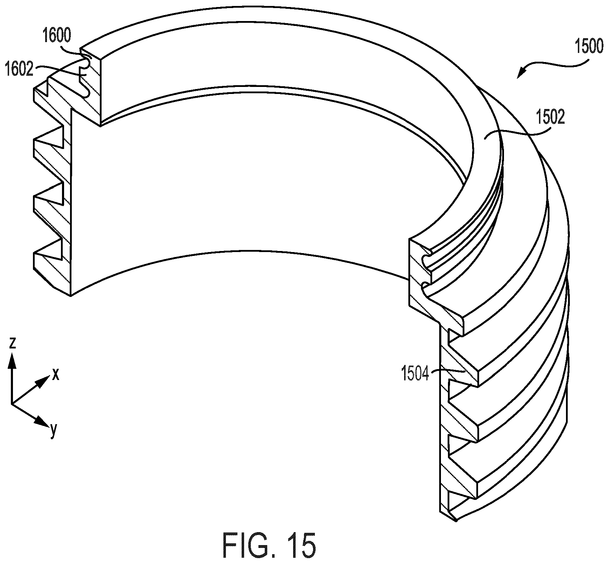

FIG. 15 shows another example of a middle section 1500 that may replace the middle section 124 in the model eye unit 100 (shown in FIGS. 1A-1C) or the other model eye units described herein. The middle section 1500, in the illustrated example, retains the ridges in the upper rim 1502, but the threads 1504 exist in solely in the outer surface of the middle section, to the same effect of allowing the unit to expand within a desire ranged (e.g., 0 mm to 10 mm, in one use-case example) and remain sealed.

The middle section 1500, in the illustrated example, includes upper ridges 1600 and 1602 and the external threads 1504. The middle section 1500 may be constructed out of a hard polymer material. Thus, the middle section may be less flexible than the anterior scleral casing 104 (shown in FIGS. 10-11). Further, the middle section 1500 shown in FIG. 15 may be opaque.

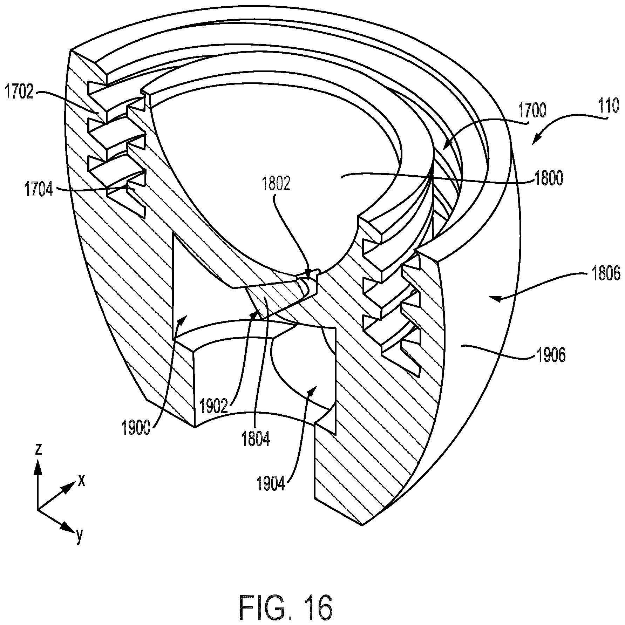

FIG. 16 shows an upper perspective view of the posterior scleral section 110. The posterior scleral section 110 may be designed to fit the screw lock mechanism of the middle section 124 (shown in FIGS. 1B and 1C) by having matching threads within a channel 1700 that allow for the middle section to be screwed in and out of the posterior section to the desired length. External threads 1702 and internal threads 1704 can be seen in FIG. 16.

FIG. 16 specifically depicts the external thread 1702 and the internal threads 1704 of a female counterpart designed to mate with the middle section. The inner surface 1800 of the internal section may also be curved to match the contour the retina.

In the illustrated example, the inner surface 1800 of the posterior scleral section 110 includes an opening 1802 (e.g., a 2 mm opening at 15 degrees from center, in one use-case example) that may be used to fill or drain the fluid of the model eye using a syringe or other suitable device and may be plugged with a plug 1804 if so desired. The opening 1802 may be positioned in the same location as the optic nerve, so when in use, it will be anatomically correct and a non-intrusive feature that mimics the real optic nerve when viewed through instrumentation.

The opening 1802 may be positioned in a similar location as the optic nerve, so when in use, it will be anatomically correct and a non-intrusive feature that mimics the real optic nerve when viewed through instrumentation, if desired. The outer casing 1806 of the posterior scleral section 110 may be oval shaped following the bottom scleral curvature of the eye and may be constructed out of the same material (e.g., a hard polymer material) as the middle section to allow for desired compatibility as well as visual continuity with the shape of the anterior section, in one example.

In FIG. 16, the posterior scleral section 110 includes an opening 1900 near the bottom that allows the suction cup 114 (shown in FIGS. 1B and 1C) to be used to secure the assembled model eye unit onto a viewing microscope/laser equipment.

When the suction cup is removed, the user may access the opening 1802 (e.g., a syringe opening) of the optic nerve and allows for a syringe to be used to fill and drain the fluid inside the assembled model eye unit without separating the sections by attaching it to the syringe opening at a bottom 1902 of the opening 1802.

The outer casing of the posterior scleral section 110 has a pass-through hole 1904. The suction cup 114 (shown in FIGS. 1B and 1C) may have a corresponding pass-through hole. These pass-through holes allow hard mounting of the unit onto a vertical or horizontal surface to facilitate surgical practice, or mounting onto the ocular orbit of a full-size patient head simulation model, depending on user demands.

In the illustrated example, the outer casing 1906 of the posterior scleral section 110 is oval shaped following the bottom scleral curvature of the eye. Further, the posterior scleral section 110 may be constructed out of the same material as the middle section 1500 (shown in FIG. 15) to allow for property compatibility as well as visual continuity with the shape of the anterior section. However, in other examples, the posterior section and the middle section may be constructed out of different materials and/or the outer casing may have a different contour.

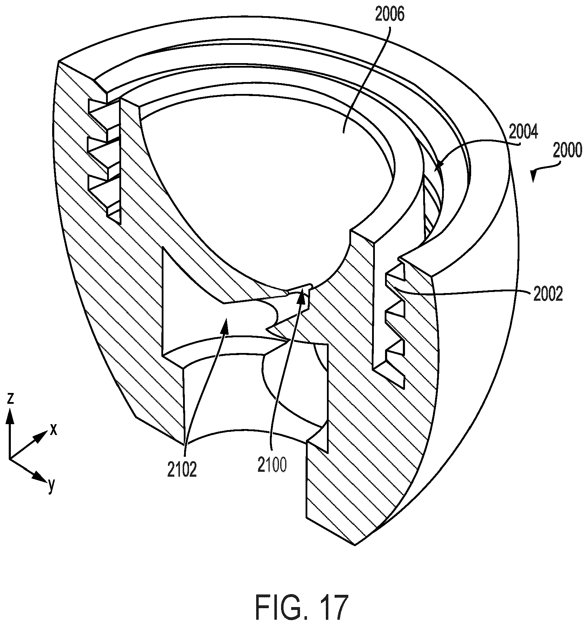

Another embodiment of a posterior scleral section 2000 is shown in FIG. 17. The posterior scleral section 2000 has one row of threads 2002 in the outer section of the channel 2004 to match the threads of the single threaded middle section 1500 (shown in FIG. 15) and allow the model eye unit to be expanded to the desired length while retaining the water sealing characteristics. An inner surface 2006 of an internal section retains the curvature that matches the contour of a retina and retains a pass-through hole (similar to the other pass through holes described herein) for hard mounting the unit.

In FIG. 17, the threads 2002 of the female counterpart to the middle section can be seen. The curvature of the inner surface 2006 is also shown in FIG. 17.

An opening 2100 is further shown in FIG. 17. The opening 2100 may, in one use-case example, have a 2 mm diameter at 15 degrees from center. The opening 2100 may again be used to fill or drain the fluid of the model eye using a syringe and may be plugged with a plug if so desired. An opening 2102 allows a suction cup (e.g., the suction cup 114 shown in FIGS. 1B and 1C) to be used to secure the entire assembled unit onto a viewing microscope/laser equipment.

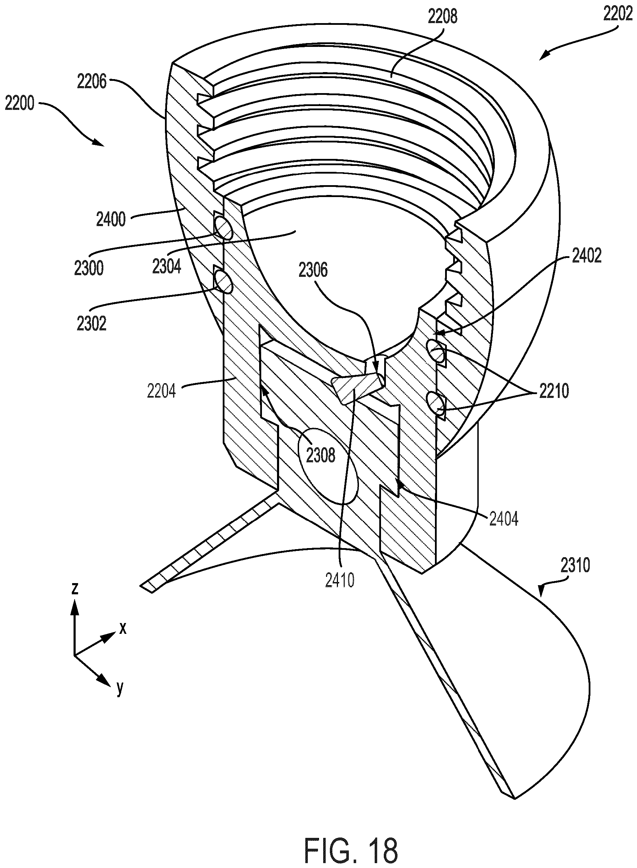

Another embodiment of a posterior scleral section 2200 is shown in FIG. 18 (in cross-section) that is included in a model eye unit 2202. The posterior scleral section 2200 uses a slip tube 2204 that may slide up and down inside a posterior section 2206 and it is held in place by screwing the middle section 1500 into exposed internal threads 2208 of the inner wall of the posterior section 2206, which causes a deformation of the posterior section, constricting the diameter of the opening of the posterior section, and restricting the movement of the slip tube 2204 that has the shape of the retina, to be positioned via pushing or pulling the slip tube, that may be held in place through friction and a pair of O-rings 2210, which may also be used for water sealing.

The slip tube 2204 may retain a pass-through hole for hard mounting the assembled unit onto the desired instrument, as well as accommodating for the suction cup 114. A plug may be used to add or remove materials via a syringe and/or other suitable device.

FIG. 18 specifically depicts internal threads 2208 of the posterior section 2206, which allow the middle section to be fitted while maintaining the water seal. Two channels 2300 and 2302 are present in the bottom half of the internal walls of the posterior section 2206 that accommodate for the O-rings 2210 that create a snug fit and water seal for the internal components of the model eye unit, helping it remain in the desired location. A retina curvature 2304 is shown in the slip tube 2204, as well as an optic nerve hole 2306, a suction cup chamber 2308, and a suction cup 2310 are illustrated in FIG. 18.

FIG. 18 illustrates the internal threads 2208 that match the threads of the single threaded middle section 1500, shown in FIG. 15. As shown in FIG. 18, because there is less material present than the double threaded middle section 124 (shown in FIG. 13), when the middle section is screwed all the way into the model eye unit, walls 2400 of the posterior section 2206 flex, reducing an opening 2402 present where the slip tube 2204 slides into. Along with the O-rings 2210 the deformation and friction allow the slip tube to remain in the desired position, which is changed by pushing or pulling the slip tube up and down the opening. The optic nerve hole 2306 is visible in FIG. 18 as is a suction cup cavity 2404 and the suction cup 2310. A pass-through hole for hard mounting is also present in the model eye unit 2202, as is a plug 2410, in the illustrated example.

Each part may contain unique components that allow for selective laser trabeculoplasty (SLT), laser peripheral iridotomy (LPI), yttrium aluminum garnet (YAG) capsulotomy, vitreolysis, and retinal photocoagulation training to take place, and the model eye unit may be assembled with the components and used in the manner that is described as follows.

SLT is a form of laser surgery that targets the angled structure of the eye where the cornea and iris meet in a specific region visualized by this contact angle, called the trabecular meshwork. It is this contact angle that is evaluated in the gonioscopy procedure, whereby a mirrored lens is placed on the cornea with contact gel and the angle can be viewed through the mirrored lens in the slit lamp instrument. It is also in this angle location that the SLT laser surgical procedure, using the gonioscopy lens, creates comparatively small openings that allow the fluid that has built up in a patient's eye to flow back out of the eye, restoring the natural flow of fluid within the eye to reduce pressure.

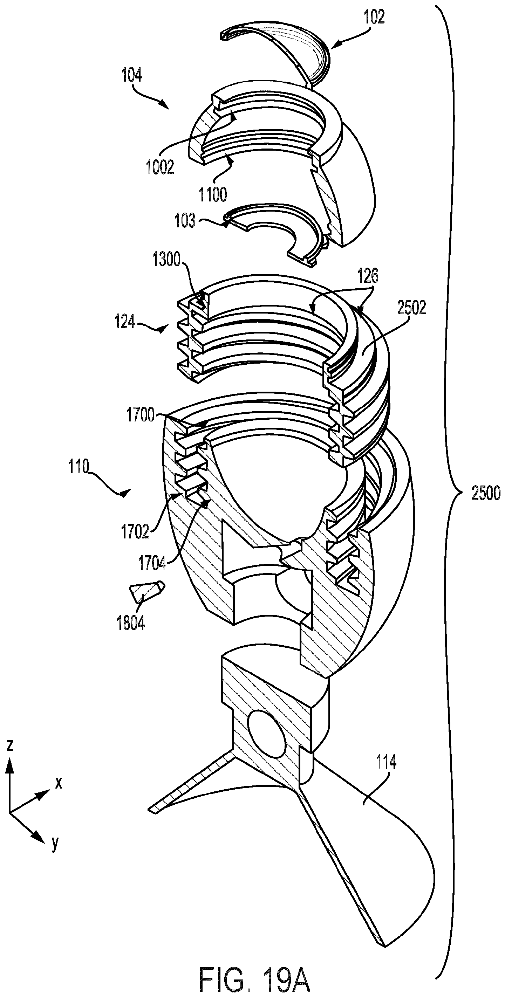

For the model eye unit to be used in SLT training or practice, as well as for gonioscopy evaluation training or practice, the unit may be assembled in the manner shown in FIGS. 19A-19B. In the illustrated example, a model eye unit 2500 includes the lens 102, the anterior scleral casing 104, the iris disc 103, the middle section 124 in a fully inserted position, the posterior scleral section 110 with the pass-through hole 112, and the suction cup 114.

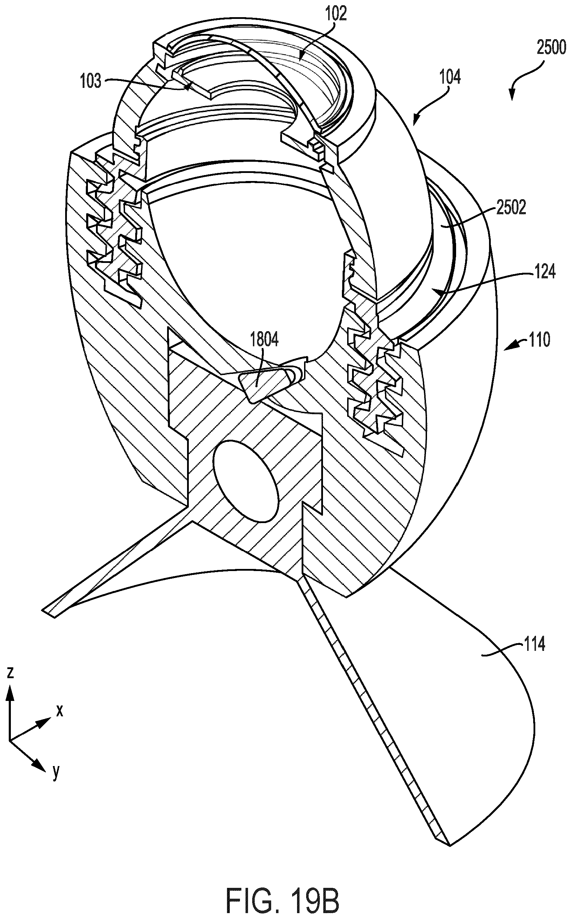

FIG. 19A shows an exploded view of the model eye unit 2500. The lens 102 (functioning as the cornea), the anterior scleral casing 104, the iris disc 103, the middle section 124 in a fully inserted position, the posterior scleral section 110, the suction cup 114, and the plug 1804 are illustrated in FIG. 19B. The model eye unit 2500 may be assembled using the lens 102 which is attached to the anterior scleral casing 104 such that a water tight seal is formed.

To insert the iris disc 103 into its desired location, the anterior scleral casing 104 may be flipped over and the user may insert the iris disc into the first set of ridges 1002 that exist in the anterior scleral casing 104, allowing the iris disc to fit securely inside the anterior section cavity. The iris disc 103 may contain a sticker image of an iris, in some instances.

The iris disc 103 may be designed with a trabecular mesh-like edge (e.g., ridge) that extends around the circumference of the disc, as previously discussed. This ridge may be raised 0.5 mm above the horizontal plane, in one specific use-case example. Further, in one use-case example, the iris disc itself may have a pupil opening from 2 mm to 8 mm in diameter to simulate the range of constricted to fully dilated pupils, and a series of curved external arms that allow the disc to remain in place by pressure fitting against the sidewalls, while enabling free flow of fluid (e.g., water and/or other suitable fluids) between the components of the model eye unit. Further, the iris disc 103 may have a waterproof sticker with a pupil hole to match the aperture of the iris disc that is attached to the surface to visibly emulate an iris during use, and the outer edges of the sticker gets modified when the procedure is conducted, for instance.

To continue the assembly of the model eye unit 2500, the user may then take the posterior scleral section 110, and add the plug 1804 to seal off the unit. Next, the male threads in the double-sided threaded interface 126 of the middle section 124 may be engaged with the external threads 1702 and internal threads 1704 in the channel 1700 of the posterior scleral section 110 via the user. To elaborate, the middle section 124 may be turned clockwise to thread the middle section into the posterior scleral section 110 until a desired length is achieved. In this way, model eye unit adaptability is increased.

The posterior scleral section 110 may sit flush with a surface 2502 of the middle section 124 when inserted fully, or may extend to a desired length (e.g., in the range of 0 mm to 10 mm vertically, in one use-case example) while maintaining a water seal. FIG. 19B shows the surface 2502 of the middle section 124 sitting flush with the posterior scleral section 110.

Continuing with FIG. 19A, once the desired length between the middle section 124 and the posterior scleral section 110 is set, the assembly formed between the posterior scleral section and the middle section may be placed under water and filled with fluid. While under water, and once the air bubbles have been removed, the anterior scleral casing 104 may be pushed into the middle section 124. To elaborate, the ridges 1100 in the anterior scleral casing 104 may engaged with the upper row of ridges 1300 in the middle section 124 to form a water tight seal. The anterior scleral casing may be constructed out of a flexible material to allow for this engagement. Next, the model eye unit 2500 may be placed in the laser training device via the suction cup 114, or hardware compatible with the training device manufacturer to be placed at a desired location.

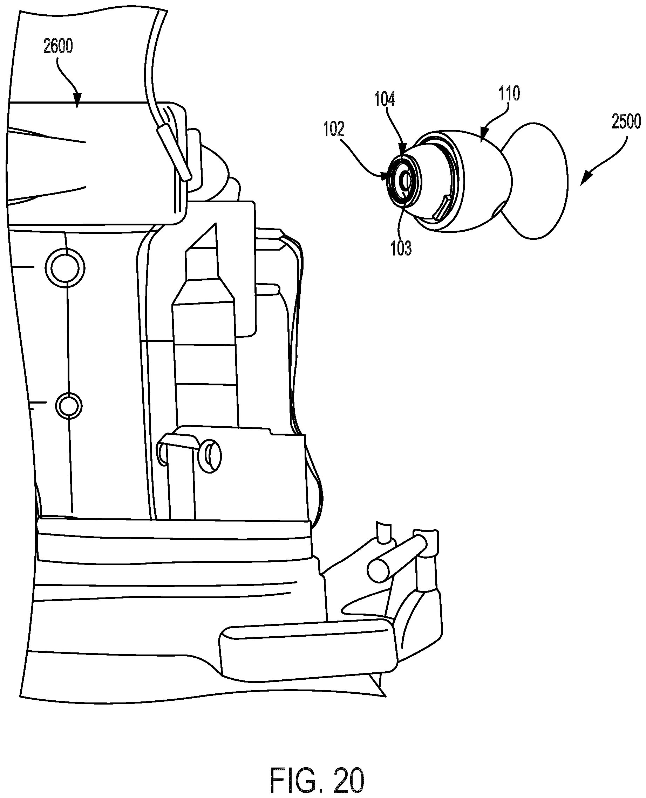

For gonioscopy and SLT, the model eye unit 2500 may be positioned in plane to the slit lamp/laser device 2600 as a human eye would be positioned if a patient was being examined as shown in FIG. 20. A contact gel may be placed onto the cornea/lens and the procedure for STL is performed to burn off the trabecular mesh (i.e., the raised edge 306 (e.g., the ridge) on the iris disc 103 shown in FIG. 3) using a laser.

The STL procedure may unfold as follows: the clinician may visualize the angle of the trabecular mesh through an angled lens (gonioscopy procedure), and when the laser is focused onto the region on the trabecular mesh that it wants to apply the laser on, the SLT laser equipment button may be fired to apply a laser pulse across the mirror and burn a hole into the trabecular mesh at the desired location and angle. In one example, the procedure may be done in quadrants, with 20 to 30 laser applications per quadrant or around 100 applications of laser through 360 degrees of the iris disc, for instance.

For the model eye units described herein, the raised edge 306 (e.g., the ridge) on the iris disc 103, shown in FIG. 3, may behave in similar fashion to the human trabecular mesh. In the model eye unit 2500 shown in FIG. 19A-19B and 20, directly adjacent to the iris ridge, in the sticker, there may be a thin line of dark brown coloration that may simulate the trabecular meshwork and the target location for the SLT procedure. When the laser hits the pigmented band of trabecular meshwork, the target area becomes de-pigmented and bubbles may be seen within the fluid of the model eye unit. This gives the trainee physical feedback that the correct location was treated with the laser. In a human eye, bubbles can be seen in the aqueous fluid, however depigmentation does not occur and may be solely for training purposes. Once the SLT procedure is complete, the anterior scleral casing and the middle section may be separated and the burned disc and iris sticker may be removed and a new set introduced, repeating the water fill procedures described above without discarding any other components or parts of the model eye unit, if desired. In this way, the model eye unit may be efficiently used for multiple training procedures, thereby increasing customer appeal. Embodiments of the model eye unit for SLT and gonioscopy procedures are described in greater detail herein.

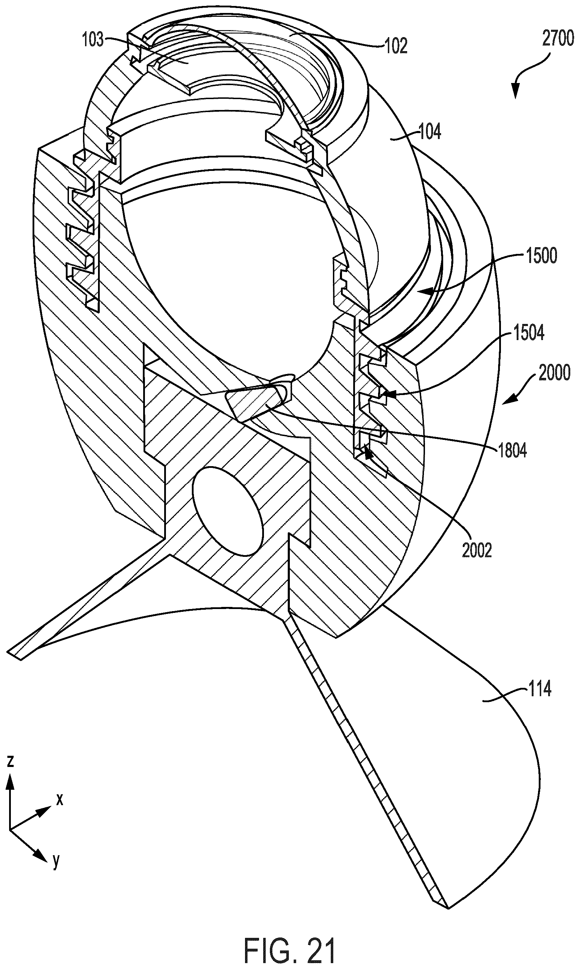

FIG. 21 shows a cross-sectional view of a model eye unit 2700. In the illustrated example, the model eye unit 2700 includes the middle section 1500 with the threads 1504 and the posterior scleral section 2000 with the threads 2002. The model eye unit 2700 further includes the lens 102 (simulating a cornea), the anterior scleral casing 104, the iris disc 103, the plug 1804, the suction cup 114, and the posterior scleral section 2000 that includes the pass-through hole.

FIG. 21 shows the model eye unit 2700 with the lens 102, the anterior scleral casing 104, the iris disc 103, the middle section 1500, the posterior scleral section 2000, the plug 1804, and the suction cup 114.

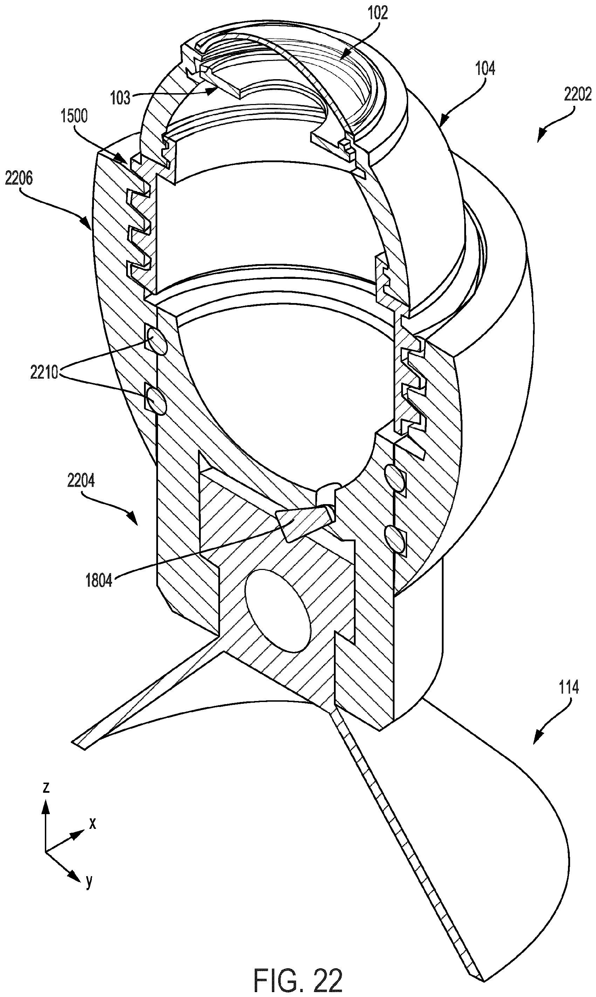

FIG. 22 shows the model eye unit 2202 with the lens 102, the anterior scleral casing 104, the iris disc 103, the posterior section 2206, the slip tube 2204, the plug 1804, the O-rings 2210, and the suction cup 114.

The different model eye embodiments may be mounted in a similar manner and follow the same assembly, fill, and operational procedures as the model eye 2500 (shown in FIGS. 19A-19B) discussed above. However, the mechanism for extending the length of the different model eye unit embodiments may vary.

LPI is a procedure which uses a YAG laser device to create a hole in the iris, to allow aqueous humor to move freely from the posterior to the anterior chamber of the eye and relieve a pupillary block. The device hereby disclosed, may be used to practice peripheral iridotomy by using the same setup as the SLT procedure described above.

For the model eye unit to be used in LPI training or practice, it may be assembled as shown in FIG. 19A, where the assembled model eye unit 2500 contains the lens 102, the anterior scleral casing 104, iris disc 103, an inserted (e.g., fully inserted) middle section 124, the posterior scleral section 110, and the suction cup 114.

FIG. 19B shows an exploded view of the model eye unit 2500, as previously indicated. The lens 102 (functioning as the cornea), the anterior scleral casing 104, the iris disc 103, the middle section 124 in a fully inserted position, the posterior scleral section 110, the suction cup 114, and the plug 1804 are illustrated in FIG. 19B.

The model eye unit 2500 may be assembled using the lens 102 which is attached to anterior scleral casing 104, forming a water seal. To insert the iris disc 103 into its location, the anterior scleral casing 104 may be flipped over and the user will insert the iris disc which may contain a sticker image of an iris, into the first set of ridges 1100 that exist in the anterior scleral casing, allowing the disc to fit securely inside the anterior section cavity.

As previously indicated, the iris disc 103 may be designed with a trabecular mesh-like ridge that extends around the circumference of the disc. This ridge may be raised 0.5 mm above the horizontal plane, in one specific use-case example. Again, in one use-case example, the disc itself may have a pupil opening from 2 mm to 8 mm in the center to simulate the range of constricted to fully dilated pupils, and a series of curved external arms that allow the disc to remain in place by pressure fitting against the sidewalls, while enabling free flow of water/fluid between the components of the model eye unit. The iris disc may have a waterproof sticker with a pupil hole to match the aperture of the iris disc that is attached to the surface to visibly emulate an iris during use, and the surface of the sticker, rather than the edges near the trabecular meshwork, may get modified when the procedure is conducted.

To continue the assembly of the model eye unit 2500, the user then may take the posterior scleral section 110, and add the plug 1804 to seal off the unit and places the threads of the middle section 124 onto the female threaded cavity of posterior scleral section 110, turning clockwise to insert the middle section inside the posterior section unit to the desired length is achieved. The middle section 124 may sit flush with the posterior scleral section 110 when inserted fully, or may be extended to any length up to 10 mm vertically while maintaining a water seal, for instance. Once the desired length is set, the two sections may be placed under water and filled with fluid. While under water, and once all air bubbles have been removed, the two sections may be connected by taking the anterior scleral casing 104 and pushing it into the middle section 124 via the grooves found in the flexible anterior scleral casing and the rigid ridges in the upper outer rim of the middle section, forming a water tight seal. The model eye unit may then be placed in the laser training device via the suction cup 114, or hardware compatible with the training device manufacturer to be placed at a desired location.

The model eye unit 2500 may be positioned in plane to the laser device 2600 as a human eye would be positioned if a patient was being examined, as shown in FIG. 20. A contact gel may be placed onto the lens 102 and the procedure for LPI is performed to burn off a hole in the iris disc 103 using a laser. When the laser hits the iris sticker and disc, the target area becomes de-pigmented and bubbles can be seen within the fluid of the model eye. This gives the trainee physical feedback that the correct location was laser treated. In a human eye, bubbles may be seen in the aqueous fluid, however depigmentation does not occur and may be only for training purposes. Once the LPI procedure is complete, the anterior scleral casing 104 and the posterior scleral section 110 may be separated and the burned disc and iris sticker may be removed and a new set introduced, repeating the water fill procedures described above without discarding any other component or part of the unit, if desired. The other embodiments of the model eye unit may be described for LPI in the same way as for SLT and gonioscopy.

As indicated above, the model eye unit 2700, shown in FIG. 21, includes the single threaded middle section 1500 and the posterior scleral section 2000. The model eye unit 2700 further includes the lens 102 (simulating a cornea), the anterior scleral casing 104, the iris disc 103, the plug 1804, the suction cup 114, and the posterior scleral section 2000 which includes the pass-through hole.

Posterior capsulotomy (e.g., YAG capsulotomy) is laser surgery that may be performed after cataract surgery, when the artificial intraocular lens, which is placed within the natural lens capsule of the patient, becomes cloudy or wrinkled, resulting in blurred vision. In posterior capsulotomy, a laser may be used to make an opening in the cloudy capsule, allowing for light to pass freely again and restoring clear vision.

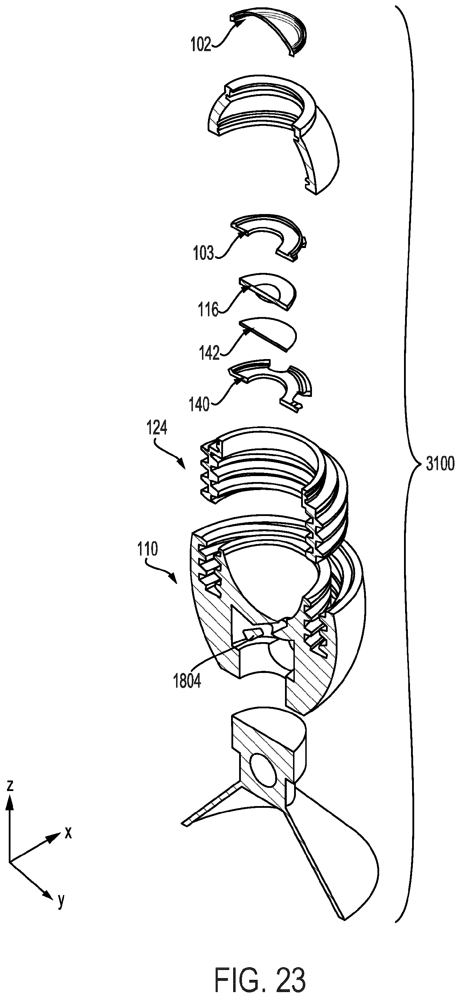

An example of a model eye unit 3100 is shown in FIG. 23. Visible in FIG. 23 is the lens 102, the iris disc 103, the anterior scleral casing 104, the middle section 124, the posterior scleral section 110 with the pass-through hole 112, and the suction cup 114.

FIG. 23 shows an exploded view of the model eye unit 3100. To elaborate, the internal components used for practicing and training posterior capsulotomy are shown in FIG. 23. The model eye unit 3100, in the illustrated example, includes the lens 102, the iris disc 103, the anterior scleral casing 104, the middle section 124, the posterior scleral section 110 with the pass-through hole 112, and the suction cup 114. The model eye unit 3100 further includes the intraocular lens 116, the thin film disc 142 (or wax paper) to simulate the posterior capsulotomy membrane, and the lens holding disc 140 which are enclosed in the anterior scleral casing 104, whereas the lens and plastic film are placed between the iris disc and the lens holding disc, which are interlocked via the contoured arms 300, allowing the unit to act as a single element when placed inside the internal ridges 1002 of the anterior scleral casing 104, if desired. This design allows for the thin film disc 142 (functioning as the posterior capsulotomy membrane) to be enclosed within an independent chamber, approximately 1 mm from the base of the iris disc 103, in one specific example, to simulate the position of the intraocular lens capsule that is affected by the posterior capsulotomy laser procedure. This allows the thin film disc 142 (e.g., membrane) to act as the intraocular lens capsule opacification membrane for laser training purposes, if wanted. The middle section 124, the posterior scleral section 110 with the pass-through hole 112, and the suction cup 114 are shown in FIG. 23.

To continue the assembly of the model eye unit 3100, the user then takes the posterior scleral section 110, and adds the plug 1804 to seal off the unit and places the male threads of the middle section 124 onto the female threaded cavity of the posterior scleral section 110 where the matching threads are found, turning clockwise to insert the middle section inside the posterior section unit to the desired length is achieved.

The unit may sit flush with the surface when inserted fully, or may extend to any length up to 10 mm vertically while maintaining a water seal, as previously discussed. Once the desired length is set, the two sections are placed under water and filled with fluid. While under water, and once all air bubbles have been removed, the two sections are connected by taking the lens 102 attached to the anterior scleral casing 104 with all of the internal components (i.e., the iris disc 103, the intraocular lens 116, intraocular lens holding disc 140, and the thin film disc 142) and pushing it into the middle section via the grooves found in the flexible anterior scleral casing 104 and the rigid ridges in the upper outer rim of the middle section 124, forming a water tight seal. The model eye unit 3100 may then be placed in the laser training device via the suction cup 114, or hardware compatible with the training device manufacturer to be placed at the correct location.

The model eye device is positioned in plane to the laser device as a human eye would be positioned if a patient was being examined. A contact gel may be placed onto the cornea/lens and the procedure for YAG capsulotomy is performed. The practitioner may visualize the center white area where the opacity is found behind the intraocular lens and then may focus the laser just behind the membrane, and switch the YAG laser on, creating a concussive effect which vaporizes a small hole in the cloudy membrane. A similar technique may take place with other types of lasers, including multi-pulse laser trabeculoplasty, selective moderate wavelength laser, or argon laser trabeculoplasty, among others.

Once the YAG capsulotomy procedure is complete, the eye unit sections may be separated and the burned film may be removed and a new film introduced, repeating the water fill procedures described above without discarding any other component or part of the unit, if desired.

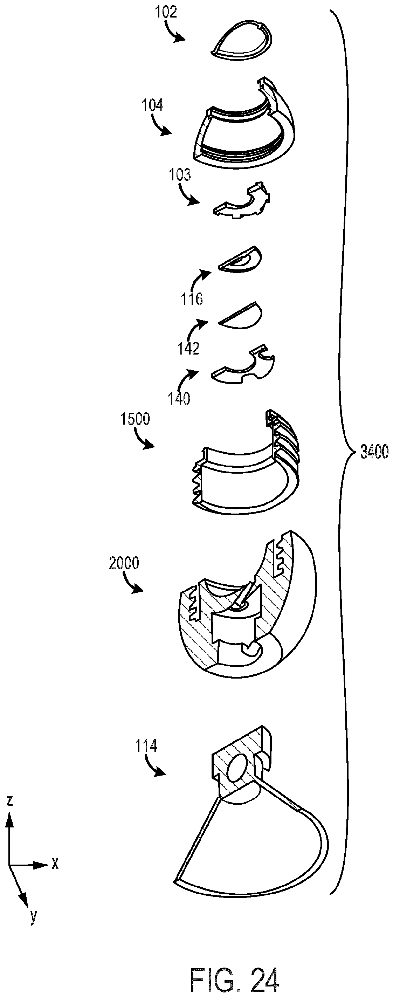

FIG. 24 shows another embodiment of a model eye unit 3400 which may be utilized for YAG capsulotomy. The model eye unit 3400 includes the single threaded middle section 1500 and the single threaded posterior scleral section 2000. The model eye unit 3400 further includes the lens 102, the iris disc 103, the anterior scleral casing 104, the intraocular lens 116, the intraocular lens holding disc 140, the thin film disc 142, and the suction cup 114 in the illustrated example.

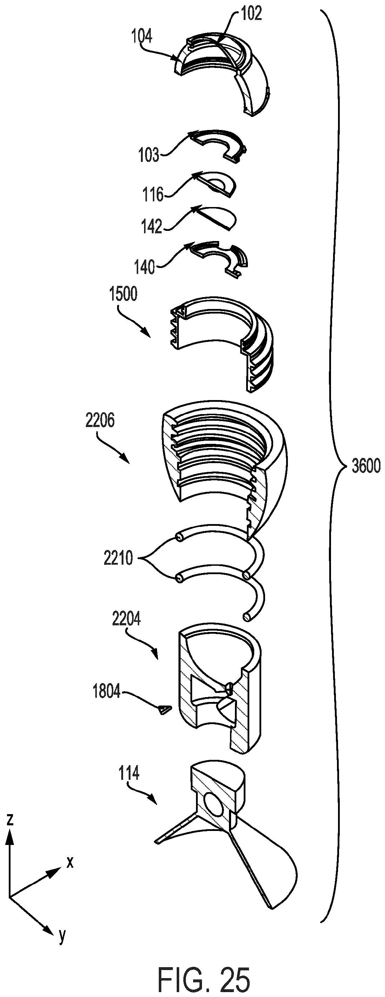

FIG. 25 shows an exploded view of a model eye unit 3600. The model eye unit 3600 includes the lens 102, the iris disc 103, the anterior scleral casing 104, the intraocular lens 116, intraocular lens holding disc 140, the thin film disc 142, the middle section 1500, the slip tube 2204, the posterior section 2206, the O-rings 2210, and the suction cup 114.

The multiple model eye unit embodiments may be mounted in the same way, and follow the same assembly, fill and operational procedures, the only difference being the mechanism for extending the length of the model eye, in some instances.

Vitreolysis may involve the application of nanosecond pulses of low-energy laser light to evaporate "floaters" or vitreous opacities. The procedure may be performed using a YAG laser and focuses the laser on the vitreous opacities that are found floating in the vitreous, or the gel like material that is located in the area between the back of the intraocular lens and the retina.

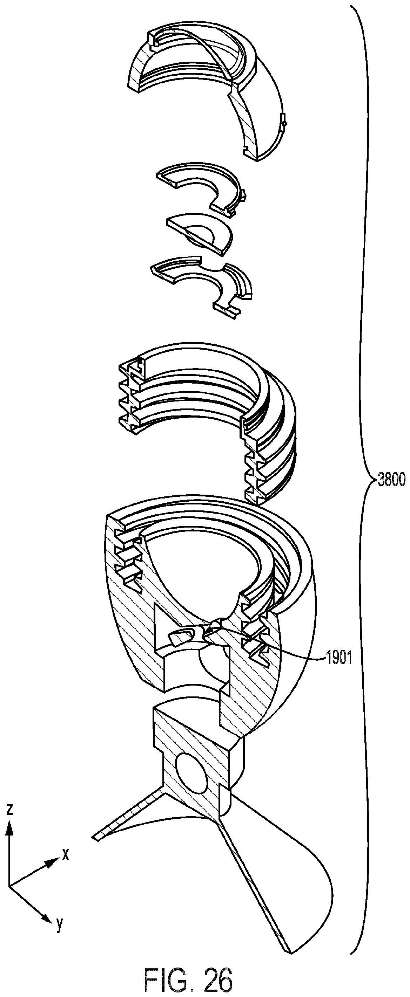

For the vitreolysis procedure, a model eye unit 3800 shown in FIG. 26 may be utilized. The model eye unit 3800 includes the lens 102, the iris disc 103, the anterior scleral casing 104, the intraocular lens 116, the lens holding disc 140, the middle section 124, the posterior scleral section 110 with the pass-through hole 112, and the suction cup 114.

For vitreolysis, the model eye unit 3800 may be put together using the lens 102, the iris disc 103, the anterior scleral casing 104, the intraocular lens 116, the intraocular lens holding disc 140, the middle section 124, the posterior scleral section 110, and the suction cup 114. The assembly of the model eye unit 3800 may follow the assembly of the iris disc 103, the intraocular lens 116, and the lens holding disc 140 whereas the lens which is sandwiched between the discs, which are interlocked via the contoured arms 300, allows the unit to act as a single element when placed inside the internal ridges of the anterior scleral casing 104.

The user may then take the middle section 124 and insert it by screwing the unit into matching grooves in the posterior scleral section 110 to the desired depth. Instead of water, silicone oil or a similar fluid may be used to simulate the vitriol, allowing small particles to be suspended in the fluid with neutral buoyancy. The particles may be premixed in the fluid and may be introduced into the unit either by using the syringe opening 1901 (shown in FIG. 26) located at the bottom of the posterior section, or by submerging both halves into the vitreous fluid containing the suspended particles, filling the device in a similar fashion as the procedure described for water. The model eye unit 3800 may be dried and placed onto the laser device (e.g., the laser device 2600 shown in FIG. 20), with the unit using the suction cup to hold it in place, in one example.

The clinician may use a contact lens to immobilize the eye and allow the laser to be focused onto the vitreous opacities that are visible through the pupil opening, and then use the YAG laser to rid the eye of "floaters" in the vitreous. When the procedure is over, the model eye unit may be separated or the fluid removed using the syringe hole to remove and replace the internal materials.

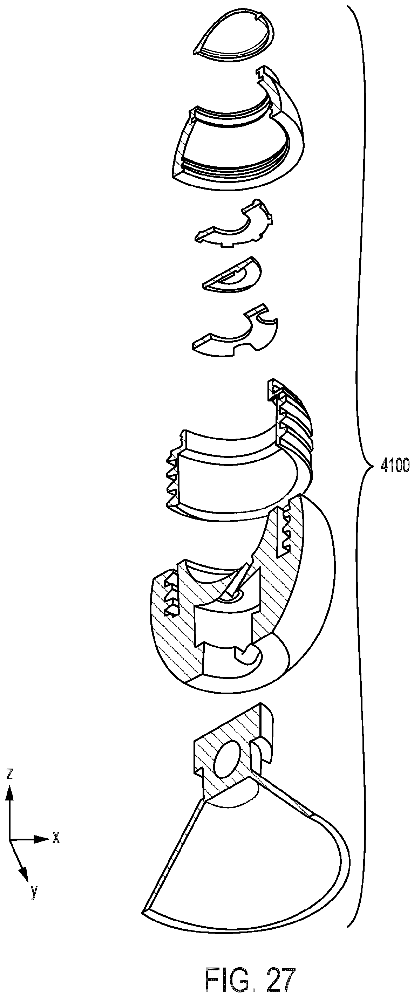

The other embodiments of the model eye unit are described for vitreolysis as follows. FIG. 27 shows a model eye unit 4100 with the single threaded middle section 1500 and the single threaded posterior scleral section 2000. The model eye unit 4100 further includes the lens 102, the iris disc 103, the anterior scleral casing 104, the intraocular lens 116, the intraocular lens holding disc 140, and the suction cup 114, in the illustrated example.

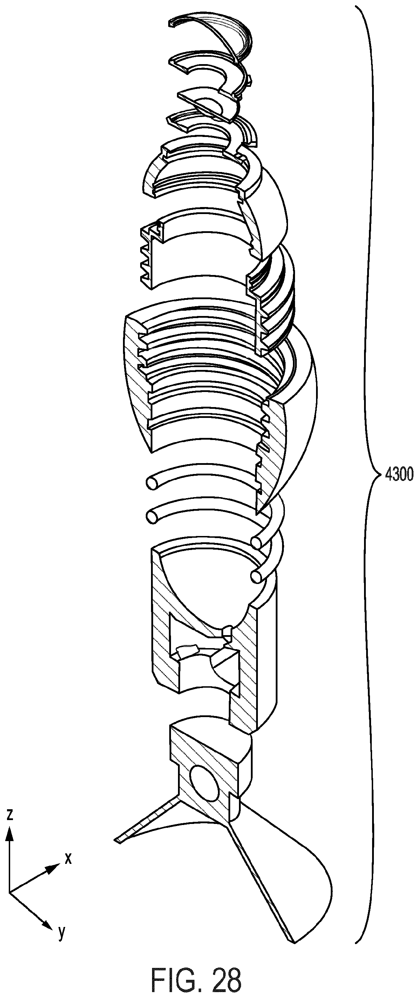

FIG. 28 shows an exploded view of another example of a model eye unit 4300 which, in the illustrated example, includes the lens 102, the iris disc 103, the anterior scleral casing 104, the intraocular lens 116, the intraocular lens holding disc 140, the middle section 1500, the posterior section 2206, the slip tube 2204, the plug 1804, the O-rings 2210, and the suction cup 114.

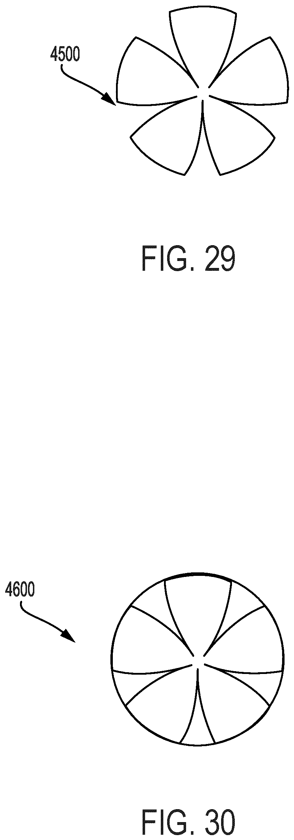

Retinal photocoagulation may be used to laser retinal vessels that become leaky with certain ocular diseases including diabetes affecting the retina. To simulate this procedure, the posterior of the internal model may be printed with one or more examples of anatomically-correct retinal images and applied to the scleral backing as a waterproof sticker. The retinal image sticker may be shaped so that when it is placed inside the curved retinal cavity, it bends with little or no creasing. The shape of the sticker 4500 is shown in FIG. 29, and a sample retinal image 4600 with the shape is shown in FIG. 30.

The laser may be applied with or without a contact retinal lens for examination as well as for visualizing retinal laser photocoagulation burns, in some cases. The printed retinal images may be easily replaced after application of the laser to allow for this procedure to be practiced several times. The model eye may be also used for gonioscopy, biomicroscopy fundus evaluation, and/or other suitable examination procedures.

Gonioscopy may be used for evaluating the angle between the cornea and the iris using a contact lens with mirrors. The gonioscopy lens may be used for the SLT procedure as described above so trainees will learn how to apply and use this lens. The gonioscopy lens may be applied directly to the model cornea with a gel and the angle between the cornea and iris may be viewed. The setup for the model eye may use the same configuration as the SLT configuration and all images and procedures for setting up the device may be the same for the model eye unit embodiments depicted in FIGS. 19A-22.

In a biomicroscopy fundus evaluation, the retina (fundus) may be viewed for training purposes by applying anatomically-correct retinal images to the scleral backing and viewing through the slit-lamp with a contact or non-contact fundus lens. The retinal images used on the scleral backing may portray normal retinal anatomy or contain various ocular disease like diabetic retinopathy, vein occlusions, glaucoma, and the like. The printed retinal images may be easily replaced to allow for various diseases to be identified. The retinal image sticker has to be shaped so that when it is placed inside the curved retinal cavity, it bends without creating any creases, in some cases.

A direct ophthalmoscopy examination may be similar to the fundus evaluation above, however a hand-held ophthalmoscope is used instead of the slit-lamp and no secondary lens is utilized. Various retinal images may be applied on the scleral backing for identification of normal or abnormal ocular conditions.

Binocular indirect ophthalmoscopy (BIO) examination may use a device called an indirect biomicroscope mounted on the trainee's head to focus light into the pupil and onto the retina for examinations. Various retinal images may be applied on the scleral backing for identification of normal or abnormal ocular conditions.

In scleral indentation, the softer, more flexible material used on the anterior portion of the scleral model may be utilized for scleral indentation (also called scleral depression). For this, trainees apply pressure from a scleral indenter onto the anterior scleral casing of the model eye unit 100 shown in FIG. 1B. Scleral indentation is used to evaluate the peripheral retina by rolling the scleral depressor against the sclera to further evaluate retinal lesions. This may be used in conjunction with BIO, in some instances. Aside from using a narrower width iris disc to simulate a dilated pupil for this procedure, the setup for the model eye may use the same configuration as the SLT configuration and all images and procedures for setting up the device may be the same for the different model eye unit embodiments.

In retinoscopy the configuration of this anatomically-proportioned, fluid-filled eye device conforms to the parameters of a human eye, and thereby allows optical evaluation of refractive power (amount of nearsightedness, farsightedness, and astigmatism). This may be achieved through retinoscopy, whereby light from a retinoscope is shone into the model eye pupil to the back of the model eye and the reflected light movement that returns through the pupil back to the retinoscope is interpreted by the evaluator. A series of ophthalmic trial lenses of various powers may be placed in front of the device to simulate various refractive powers.

FIGS. 1A-30 show example configurations with relative positioning of the various components. It is noted that the example multi-chamber containers described are portable and handheld in size. If elements in FIGS. 1A-30 are shown directly contacting each other, or directly coupled, then such elements may be referred to as directly contacting or directly coupled, respectively, at least in one example. Similarly, elements shown contiguous or adjacent to one another may be contiguous or adjacent to each other, respectively, at least in one example. As an example, components laying in face-sharing contact with each other may be referred to as in face-sharing contact. As another example, elements positioned apart from each other with only a space there-between and no other components may be referred to as such, in at least one example. As yet another example, elements shown above/below one another, at opposite sides to one another, or to the left/right of one another may be referred to as such, relative to one another. Further, as shown in the figures, a topmost element or point of element may be referred to as a "top" of the component and a bottommost element or point of the element may be referred to as a "bottom" of the component, in at least one example. As used herein, top/bottom, upper/lower, above/below, may be relative to a vertical axis of the figures and used to describe positioning of elements of the figures relative to one another. As such, elements shown above other elements are positioned vertically above the other elements, in one example. As yet another example, shapes of the elements depicted within the figures may be referred to as having those shapes (e.g., such as being circular, straight, planar, curved, rounded, chamfered, angled, or the like). Further, elements shown intersecting one another may be referred to as intersecting elements or intersecting one another, in at least one example. Further still, an element shown within another element or shown outside of another element may be referred as such, in one example.

Note that the example assembly methods included herein can be used with various model eye unit configurations. Likewise, please note the order of the assembly steps is not necessarily required to achieve the features and advantages of the example embodiments described herein, but is provided for ease of illustration and description. One or more of the illustrated actions, operations, and/or functions may be repeatedly performed depending on the particular strategy being used.

The invention will be further described in the following paragraphs. In one aspect, a model eye unit is provided that comprises a lens assembly removably attached to an anterior scleral casing; and a middle section removably coupled to the anterior scleral casing; wherein the middle section is removably and height adjustably coupled to a posterior scleral section; and wherein the lens assembly includes a cornea lens. In one example, the lens assembly may include an iris disc. Further, in one example, the lens assembly may include an intraocular lens. Still further, in one example, the lens assembly may include an intraocular lens holding disc. Even further, in another example, the lens assembly may include a thin film disc. Still further, in one example, the iris disc may include a trabecular mesh-like edge. Still further, in one example, the posterior scleral section may include a syringe opening. Still further, in one example, the middle section and the anterior scleral casing may form a water tight interface. Still further, in one example, the posterior scleral section may include a slip tube that is mated with a posterior section. Still further, in one example, the model eye unit may further comprise a suction cup removably coupled to the posterior scleral section.

In another aspect, a method is provided that comprises in a first procedure, mounting a model eye unit to a laser device; focus a laser beam on a first iris disc in a lens assembly of the model eye unit via operation of the laser device; removing the laser treated iris disc from the model eye unit; and reconfiguring the lens assembly for a second procedure. In one example, reconfiguring the lens assembly may include replacing the laser treated iris disc with a second iris disc. Further, in one example, the first iris disc includes a sticker with an image of an iris. The method may further comprise, in one example, adjusting a height of a middle section in relation to a posterior scleral section in preparation for the second procedure. Still further, in one example, adjusting the height of the middle section in relation to the posterior scleral section may include unthreading the middle section from the posterior scleral section.

In another aspect, a model eye unit is provided that comprises a lens assembly removably attached to an anterior scleral casing via a first set of ridges; and a middle section removably coupled to the anterior scleral casing via a second set of ridges; wherein the middle section is removably and height adjustably coupled to a posterior scleral section via a threaded interface; and wherein the lens assembly includes a cornea lens. In one example, the lens assembly may include: an iris disc; an intraocular lens; and/or an intraocular lens holding disc. In another example, the model eye unit may further comprise a removable plug forming a water tight seal with an opening in the posterior scleral section. In another example, the model eye unit may further comprise a suction cup removably coupled to the posterior scleral section, wherein the removable plug is positioned vertically above the suction cup. In yet another example, the threaded interface is a double sided threaded interface that include inner threads and outer threads.

It will be appreciated that the configurations and routines disclosed herein are exemplary in nature, and that these specific embodiments are not to be considered in a limiting sense, because numerous variations are possible.

FIGS. 1A-30 are shown approximately to scale. However, the components may have alternate relative dimensions, in other embodiments.

As used herein, the term "approximately" is construed to mean plus or minus five percent of the range unless otherwise specified.

The following claims particularly point out certain combinations and sub-combinations regarded as novel and non-obvious. These claims may refer to "an" element or "a first" element or the equivalent thereof. Such claims should be understood to include incorporation of one or more such elements, neither requiring nor excluding two or more such elements. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

## Claims

1. A model eye unit comprising:
a lens assembly removably attached to an anterior scleral casing; and
a middle section removably coupled to the anterior scleral casing;
wherein the middle section is removably and height adjustably coupled to a posterior scleral section; and
wherein the lens assembly includes a cornea lens.

2. The model eye unit of claim 1, wherein the lens assembly includes an iris disc.

3. The model eye unit of claim 2, wherein the lens assembly includes an intraocular lens.

4. The model eye unit of claim 3, wherein the lens assembly includes an intraocular lens holding disc.

5. The model eye unit of claim 2, wherein the lens assembly includes a thin film disc.

6. The model eye unit of claim 2, wherein the iris disc includes a trabecular mesh-like edge.

7. The model eye unit of claim 1, wherein the posterior scleral section includes a syringe opening.

8. The model eye unit of claim 1, wherein the middle section and the anterior scleral casing form a water tight interface.

9. The model eye unit of claim 1, wherein the posterior scleral section includes a slip tube that is mated with a posterior section.

10. The model eye unit of claim 1, further comprising a suction cup removably coupled to the posterior scleral section.

11. A method comprising:
in a first procedure, mounting a model eye unit to a laser device;
focusing a laser beam on a first iris disc in a lens assembly of the model eye unit via operation of the laser device;
removing the laser treated iris disc from the model eye unit; and
reconfiguring the lens assembly for a second procedure.

12. The method of claim 11, wherein reconfiguring the lens assembly includes replacing the laser treated iris disc with a second iris disc.

13. The method of claim 11, wherein the first iris disc includes a sticker with an image of an iris.

14. The method of claim 11, further comprising adjusting a height of a middle section in relation to a posterior scleral section in preparation for the second procedure.

15. The method of claim 14, wherein adjusting the height of the middle section in relation to the posterior scleral section includes unthreading the middle section from the posterior scleral section.
